# EUROPEAN PATENT SPECIFICATION

(11) **EP 0 686 350 B1**
(45) Date of publication and mention of the grant of the patent: **08.11.2000**
(21) Application number: 95201132.8
(22) Date of filing: 02.05.1995
(51) Int. Cl.: A21D 13/08

(54) **A method of stabilizing bakery products against the risk of microbiological contamination**
Stabilisierung von Backwaren gegen die Warscheinlichkeit einer mikrobieller Infektion
Méthode pour la stabilisation de produits de boulangerie contre le risque d'infection microbienne

(30) Priority: 31.05.1994 IT MI941121
(43) Date of publication of application: 13.12.1995
(73) Proprietor: BARILLA ALIMENTARE S.P.A., 43100 Parma (IT)
(72) Inventor: Guarneri, Roberto, I-43100 Parma (IT)
(74) Representative: Perani, Aurelio

(56) References cited:
- EP-A- 0 358 455
- FR-A- 2 403 746
- GB-A- 1 253 104
- US-A- 4 140 804
- N.W. DESROSIER, J.N. DESROSIER: "The technology of food preservation", 01. January 1978, AVI PUBLISHING CO. INC., WESTPORT, P. 291
- W.C. FRAZIER, D.C WESTHOFF: "Food microbiology", 01. January 1978, MCGRAW-HILL BOOK CO., NEW YORK, P. 151
- A. TÄUFEL: "Lebensmittel-Lexikon", 01. January 1979, VEB FACHBUCHVERLAG, LEIPZIG, P. 630

## Description

The present invention relates to a method for the microbiological stabilization of bakery products, particularly, but not exclusively, filled bakery products such as, for example, snacks and other similar items which are eaten between meals, having fruit, cream or similar fillings or stuffings.

In connection with bakery products in general, and with filled bakery products in particular, there is a recognized risk of microbiological contamination which may be described schematically and by way of example thus: fermentation by osmophilic yeasts for products with fruit fillings (for example, and in particular, apricots) and contamination by moulds for the products filled with cocoa creams.

Moreover, the seriousness of the problem which this risk of contamination poses to the producers, when considered both from the economic point of view and, in particular, from the health and safety point of view, is well known.

Up to now, various measures have been employed to prevent contamination.

Thus, for example, when filling with jams is carried out after baking, the filling is brought to a low humidity and low water activity with high sugar concentrations; the product is also overbaked in order also to reduce the humidity and the water activity of the dough portion as much as possible, all to counter the tendency for fermentation.

With this technique which, amongst other things, does not completely solve the problem of making the product wholesome in the hottest summer months, there is often the problem of an excessive dryness of the dough portion of the product, this dryness increasing considerably over time because of the pumping effect of the fruit-based filling which tends to absorb water from the dough in order to achieve osmotic equilibrium.

According to another technique, again with the use of jam (for example, apricot jam), the filling is carried out before baking, so that the filling undergoes effective bacteriological decontamination during the product's successive passage through the oven for baking.

In connection with this technique, the problem has been recognized that the jam undergoes a substantial quantitative reduction with simultaneous deterioration from an organoleptic point of view, as a result of the heat treatment of the baking itself; in fact, upon completion of the baking in the oven, it frequently appears as a thin, essentially rubbery, and not very tasty film.

As far as the use of cocoa cream is concerned, the measure adopted is that of using anhydrous creams which are less susceptible to contamination, together with over-baking of the dough portion.

In this case, a hardening of the cocoa cream often takes place, the cream changing from the anhydrous state to a partially hydrated state, irreversibly changing its consistency to the point that it becomes organoleptically unacceptable.

The problem upon which the present invention is based is that of providing a method which can effectively reduce and substantially, if not completely, eliminate the risk of microbiological contamination of bakery products of the type considered above, at the same time overcoming the organoleptic-deterioration problems of the prior art.

This problem is solved, according to the invention by a method of producing bakery products comprising dough outers and soft centres or fillings selected from jams, creams generally, and the like, in which the filling is associated with the dough by filling after baking, characterized in that it comprises the successive steps of:
- pasteurizing the filling at a pasteurization temperature of between 70 and 80°C,
- filling the dough outer, after baking, with the pasteurized filling which is kept at the pasteurization temperature.

To advantage, and in accordance with a preferred embodiment of the invention, filling after baking is carried out by known devices and equipment which are kept at a temperature at least equal to the pasteurization temperature of the filling to ensure that the resulting bacteriostasis is maintained.

With the method of the invention, the basic teaching of which is that of carrying out the filling hot, after baking, or rather in conditions of bacteriostasis or sterilization (in relation to yeasts and moulds) with the use of a pasteurized filling (jam, cocoa cream and the like), which is kept in the pasteurized condition, the following important results are simultaneously achieved:
- microbiological safety of the products (substantial elimination of the bacteriological risk) is ensured,
- it is possible advantageously to use fruit jams having high humidity and high Aw values as well as hydrated cocoa creams, after baking.

By virtue of these results, the producers now have a greater degree of operative freedom both as regards the baking and the conditioning of the dough (greater residual humidity), and as regards the quantity of filling (or stuffing), which can be increased without any risk, with clear advantages from an organoleptic point of view.

Other advantages and characteristics of the method of the invention will become clearer from the following description of some examples of the implementation thereof, which are given by way of non-limiting example and in which all the percentages are percentages by weight unless otherwise indicated.

### EXAMPLE 1

Apricot jam having a moisture content of 27% and an Aw of 0.80, was drawn continuously from a suitable reservoir and supplied to an exchanger with a tube nest, through which water flowed at 90°C.

The apricot jam, which was heated to a temperature of 70°C, remained in an exchanger of this type for an average period of between 10 and 30 minutes, undergoing reliable pasteurization.

Immediately upon discharge from the exchanger, the flow of pasteurized jam was supplied, through a pipe heated to 70-75°C, to a conventional needle filling machine, which was also heated as a whole, including the filling needles, to 70-75°C.

The filling machine was simultaneously supplied with baked products of the type known as doughnuts, which came from a respective baking stage and were kept at a temperature of about 70-75°C.

These baked products which had a moisture content of 20% and an Aw of 0.80, were filled hot with the pasteurized jam kept at the pasteurization temperature. Immediately afterwards, they were packaged in suitable containers.

The filled snack of the invention, produced in the aforementioned manner, was characterized by a dough outer with a moisture content of 20% and an Aw of 0.80% and a centre (or filling or stuffing) of apricot jam having a moisture content of 27% and an Aw of 0.80.

### EXAMPLE 2

The methods set out in Example 1 were repeated, except that a cocoa cream having a moisture content of 23% and an Aw of 0.80 was used to fill the bakery products.

In this case, the pasteurization was carried out at an average temperature of 75°C with periods of about 20-30 minutes spent in the tube-nest exchanger.

The filled snack thus obtained was characterized by a dough outer having a moisture content of 20% and an Aw of 0.80 and by a centre or filling of cocoa cream having a moisture content of 23% and an Aw of 0.80.

## Claims

1. A method of producing bakery products comprising dough outers and soft or filled centres selected from jams, creams generally, and the like, in which the filling is associated with the dough by filling after baking, characterised in that it comprises the successive steps of:
- pasteurising the filling at a pasteurisation temperature of between 70 and 80°,
- filling the dough outer after baking with the pasteurised filling which is kept at the pasteurisation temperature.

2. A method of producing bakery products according to claim 1, wherein the equipment for filling of the dough after baking is kept at a temperature at least equal to the pasteurisation temperature of the filling.

3. A method of producing bakery products according to claim 1 or 2, wherein the filling after baking is carried out keeping the baked dough outer at the pasteurisation temperature of the filling.

4. Filled bakery products obtainable by the method according to any one of the previous claims.

## Patentansprüche

1. Verfahren zum Herstellen von Backwaren mit Teig-Außenkörper und einer weichen Füllung aus Konfitüre, Krems im allgemeinen und dergl., wobei die Füllung dem Teig durch Einfüllen nach dem Backen zugeordnet wird, gekennzeichnet durch folgende Schrittfolge:
- Pasteurisieren der Füllung bei einer Pasteurisierungstemperatur zwischen 70° und 80°,
- Füllen der Teig-Außenschicht nach dem Backen mit der pasteurisierten Füllung, die auf der Pasteurisierungstemperatur gehalten wird.

2. Verfahren zum Herstellen von Backwaren nach Anspruch 1, bei dem die Gerätschaft zum Einfüllen des Teigs nach dem Backen auf einer Temperatur mindestens gleich der Pasteurisierungstemperatur der Füllung gehalten wird.

3. Verfahren zum Herstellen von Backwaren nach Anspruch 1 oder 2, bei dem das Füllen nach dem Backen erfolgt, während der gebackene Teig-Außenkörper auf der Pasteurisierungstemperatur der Füllung gehalten wird.

4. Nach dem Verfahren eines der vorgehenden Ansprüche erhaltene gefüllte Backwaren.

## Revendications

1. Procédé pour la préparation de produits de boulangerie, comprenant des parties extérieures constituées d'une pâte et des centres mous ou fourrés choisis entre des jambons, des crèmes de manière générale et des substances similaires, dans lequel la fourrure est associée à la pâte par fourrage après cuisson au four, caractérisé en ce qu'il comprend les étapes successives consistant :
- à pasteuriser la fourrure à une température de pasteurisation comprise dans l'intervalle de 70° à 80°C,
- à fourrer la partie extérieure en pâte, après cuisson au four, avec la fourrure pasteurisée qui est maintenue à la température de pasteurisation.

2. Procédé pour la préparation de produits de boulangerie suivant la revendication 1, dans lequel le dispositif pour le fourrage de la pâte, après cuisson au four, est maintenu à une température au moins égale à la température de pasteurisation de la fourrure.

3. Procédé pour la préparation de produits de boulangerie suivant la revendication 1 ou 2, dans lequel le fourrage, après la cuisson au four, est effectué en maintenant la partie extérieure de pâte cuite au four à la température de pasteurisation de la fourrure.

4. Produits de boulangerie fourrés pouvant être obtenus par le procédé suivant l'une quelconque des revendications précédentes.
